# FASCICULE DE BREVET EUROPEEN

(11) **EP 1 647 112 B1**
(45) Date de publication et mention de la délivrance du brevet: **10.07.2013**
(21) Numéro de dépôt: 04767893.3
(22) Date de dépôt: 15.07.2004
(51) Int. Cl.: G06F 13/38

(54) **PROCEDE ET DISPOSITIF DE TRANSMISSION DE DONNEES**
VERFAHREN UND VORRICHTUNG ZUR ÜBERTRAGUNG VON DATEN
DATA TRANSMISSION METHOD AND DEVICE

(30) Priorité: 15.07.2003 FR 0308622
(43) Date de publication de la demande: 19.04.2006
(73) Titulaire: Ortais, Paul, 91370 Verrières-Le-Buisson (FR)
(72) Inventeur: Ortais, Paul, 91370 Verrières-Le-Buisson (FR)
(74) Mandataire: Novagraaf Technologies
(86) Numéro de dépôt international: PCT/FR2004/050332
(87) Numéro de publication internationale: WO 2005/008970

(56) Documents cités:
- EP-A- 0 450 879
- EP-A- 1 227 610
- US-A- 5 777 762
- US-A- 6 072 804

## Description

La présente invention se rapporte au domaine des procédés et dispositifs de transmission de données. La présente invention se rapporte plus particulièrement à ce type de procédés ou dispositifs appliqués dans un système fermé de calculateurs de contrôle embarqué, tels que par exemple dans un véhicule aérien ou terrestre.

En effet, l'objet de la présente demande concerne les systèmes utilisant une pluralité de calculateurs, de capteurs, d'actionneurs, et le réseau de communication les reliant. À l'heure actuelle, de tels systèmes sont utilisés au contrôle d'automatismes complexes et exigeants en performance comme les véhicules aérospatiaux, terrestres ou marins.

Dans l'état de l'art, les calculateurs sont reliés par des bus, qui sont utilisés pour les deux fonctions suivantes
- relier physiquement les calculateurs pour l'échange de données (médium),
- arbitrer l'accès des calculateurs au médium en émission et l'acceptation des messages en réception.

Cette pratique d'utilisation des bus informatiques présente les contraintes et limitations suivantes :
- le bus est un point commun de circulation des données du système et met sa sécurité en « danger » en cas de défaillance,
- la probabilité de défaillance du bus est élevée car de nombreux noeuds y sont reliés,
- le bus n'admet qu'un seul émetteur simultanément, ce qui ralentit les échanges,
- le bus impose un protocole pour arbitrer l'accès au bus, identifier l'émetteur et ses destinataires, confirmer l'arrivée des messages,
- l'arbitrage du bus consomme deux ressources importantes sur chaque noeud : la partie matérielle confiée au contrôleur de protocole physique, dont le coût provient de la circuiterie mise en oeuvre, et la partie logicielle qui consomme une part importante de la mémoire de programme et de la puissance de calcul du noeud. Il est en effet fréquent que, dans un système actuel, le contrôle du bus consomme la majorité des ressources matérielles et logicielles du système.

La justification de base du bus est d'éliminer de nombreuses liaisons filaires. Dans plusieurs cas, trois inconvénients apparaissent ensemble ou indépendamment :
- coût du noeud : le bus ne peut s'étendre aux capteurs et actionneurs les plus simples quand le coût d'un noeud ne s'y justifie pas,
- temps de propagation : certains signaux rapides ne peuvent transiter par un bus car celui-ci est ralenti par son protocole,
- signaux sécuritaires : les signaux à sécurité critique ne peuvent emprunter le bus à cause de la limitation mentionnée précédemment.

Il résulte de ces limitations que, dans les systèmes actuels, le bus transporte au mieux les signaux non sécuritaires, lents, et vers les périphériques coûteux. Un important câblage filaire subsiste vers les noeuds présentant une contrainte de sécurité, une contrainte de temps et/ou coût, limitant l'intérêt économique du déploiement de bus.

Le support physique des communications ou "médium", typiquement du câble électrique, voit ses possibilités réduites quand on l'utilise comme bus :
- connecter de nombreux noeuds sur un conducteur, selon une disposition dépendant des applications, requiert la spécification de normes électriques sévères, elle-même longues et coûteuses à mettre au point puis à respecter ;
- l'interface physique du noeud au bus, supporte ces contraintes qui se traduisent en un coût matériel additionnel. À l'heure actuelle, il est courant d'y ajouter des composants passifs de filtrage et de protection et d'ajuster ces circuits supplémentaires sur le système final pour obtenir un comportement correct du bus ;
- le protocole de communication impose également des contraintes réduisant la performance du support physique. Par exemple, le câble torsadé utilisé selon la norme EIA644 autorise un débit supérieur à 500 Mbits/s (mégabits par seconde), et le même câble employé selon la norme ISO11898 (bus CAN), connu comme standard de l'industrie, ne transmet au mieux que 1 Mbits/s. Ces deux ordres de grandeur de perte de bande passante proviennent d'une contrainte majeure du protocole, l'acquittement des messages par leur dernier bit.

L'art antérieur connaît déjà une solution décrite dans la demande de brevet WO 0114976 qui divulgue un système dans lequel il y a un transfert de données entre une première utilisation sur un premier calculateur et une deuxième utilisation sur un deuxième calculateur. La liaison s'effectue de préférence par l'intermédiaire d'un processus optique de transfert de données. Les utilisations communiquent avec des utilisations suppléantes prévues sur chacun des calculateurs identiques, sans que des ordres spéciaux spécifiques des bus soient obligatoirement pris en compte.

Néanmoins, dans tous les systèmes existants jusqu'à présents, il n'a jamais été envisagé de n'utiliser aucun bus informatique puisque ces derniers sont considérés comme essentiels pour le réseau de transmission de données.

La présente invention entend remédier aux inconvénients de l'art antérieur en réalisant un système équivalent en évitant l'emploi des bus, et en éliminant le contrôleur physique de protocole, circuit logique autorisant et validant les transmissions et le contrôleur logique de protocole, partie logicielle du noeud spécifique à l'utilisation du bus, qui sont, bien entendu liés à la présence de bus informatiques.

On connaît dans l'art antérieur la demande de brevet européen EP 1 227 610 décrivant un réseau métropolitain d'accès utilisant une variante du protocole MAC dans lequel chaque station sur un anneau est associée avec un ou plusieurs intervalles de temps.

On connaît également dans l'art antérieur la demande de brevet européen EP 0 450 879 (Hunting Communication Tech.) « Ring communication system ».

Ce document concerne un système de communication dans lequel une pluralité de noeuds ou unités d'accès à des terminaux est reliée par l'intermédiaire d'un anneau de support. Les données sont transmises en série de paquets de données à l'intérieur desquels les bits ou octets sont multiplexés. Chacune des unités d'accès possède des voies pré-affectées à l'intérieur du paquet afin d'assurer la disponibilité de la ligne et d'éviter l'encombrement et l'attente.

Il mentionne l'utilisation de voies pré-affectées à l'intérieur du paquet, ce qui relève d'un mécanisme de sélection des données par des tranches temporelles : chaque noeud pique dans la ou les tranches temporelles qui lui sont assignées. Le document D ne mentionne donc nullement un système dans lequel aucune étape de contrôle physique ou logique pour l'autorisation et/ou la validation des données transmises n'est effectuée.

La solution exposée dans ce document implique une forte dépendance temporelle des données et une gestion du temps coûteuse car chaque noeud doit répéter le tri temporel et y assigner des ressources matériels qui n'auraient pas lieu d'tre sans aucun contrôle physique ou logique sur les données transmises (notamment les horloges locales des noeuds ne doivent pas dériver entre elles, auquel cas les collisions entre données seraient d'autant plus nombreuses que les dérives seraient importantes).

Pour ce faire, la présente invention concerne un procédé de transmission de données dans un système fermé de calculateurs de contrôle embarqué, tels que par exemple dans un véhicule aérien ou terrestre, comportant une étape de transmission de données point à point entre deux noeuds de transmission par exemple via un réseau filaire, chaque noeud possédant un ou plusieurs canaux autorisant chacun la transmission avec un unique noeud, une étape de conversion des données pour leur transmission, par exemple en série, caractérisé en ce qu'il ne comprend aucune étape de contrôle physique ou logique pour l'autorisation et/ou la validation des données transmises de sorte que toute réception de données à un noeud est suivie inconditionnellement d'une réémission, c'est-à-dire que le contrôle des flux de données est déterminé implicitement par la topologie caeblée mise en oeuvre.

L'originalité et l'aspect innovant de la présente invention résident en l'absence d'étape de contrôle aussi bien physique que logique pour l'autorisation/validation des données transmises. Ceci a pour effet de diminuer de façon importante les coûts de gestion des données en chaque noeud.

L'invention concerne un procédé où la topologie détermine le comportement de transmission des données sur chaque noeud, en l'absence de l'attribution de fentres temporelles à chaque noeud. Dans l'invention, plusieurs noeuds peuvent émettre simultanément des données, indépendamment de toute synchronisation des noeuds par une horloge commune.

L'invention se caractérise donc en particulier par l'absence d'une horloge maître commandant l'ensemble des noeuds, et par l'absence de signal de synchronisation des noeuds, qui est possible du fait que chaque noeud, dans l'invention, collisions entre données seraient d'autant plus nombreuses que les dérives seraient importantes).

Pour ce faire, la présente invention concerne un procédé de transmission de données dans un système fermé de calculateurs de contrôle embarqué, tels que par exemple dans un véhicule aérien ou terrestre, comportant une étape de transmission de données point à point entre deux noeuds de transmission par exemple via un réseau filaire, chaque noeud possédant un ou plusieurs canaux autorisant chacun la transmission avec un unique noeud, une étape de conversion des données pour leur transmission, par exemple en série, caractérisé en ce qu'il ne comprend aucune étape de contrôle physique ou logique pour l'autorisation et/ou la validation des données transmises de sorte que toute réception de données à un noeud est suivie inconditionnellement d'une réémission, c'est-à-dire que le contrôle des flux de données est déterminé implicitement par la topologie câblée mise en oeuvre.

L'originalité et l'aspect innovant de la présente invention résident en l'absence d'étape de contrôle aussi bien physique que logique pour l'autorisation/validation des données transmises. Ceci a pour effet de diminuer de façon importante les coûts de gestion des données en chaque noeud. L'invention concerne un procédé où la topologie détermine le comportement de transmission des données sur chaque noeud, en l'absence de l'attribution de fenêtres temporelles à chaque noeud. Dans l'invention, plusieurs noeuds peuvent émettre simultanément des données, indépendamment de toute synchronisation des noeuds par une horloge commune. L'invention se caractérise donc en particulier par l'absence d'une horloge maître commandant l'ensemble des noeud, et par l'absence de signal de synchronisation des noeud, qui est possible du fait que chaque noeud, dans l'invention, constitue une partie de réseau assurant la réception et la retransmission des données.

La réémission se fait normalement par un autre canal, sauf si les données circulent sur un canal « sans issue » ou à impasse, auquel cas il y a donc écho, il en résulte une propagation et le flux de données est donc défini principalement par la topologie du câblage.

Dans le cas d'un envoi de données ou message « erronées », le système selon l'invention fonctionne sensiblement comme les systèmes de l'art antérieur, c'est-à-dire que le dispositif transmet de manière inconditionnelle l'information relative à l'état incorrect de ses données.

Avantageusement, le procédé pourra comprendre en outre une étape d'inscription de l'état des noeuds par lesquelles les données sont transmises ou véhiculées.

De préférence, chaque noeud de transmission prélèvera le contenu pertinent pour sa tâche de contrôle dans les données transmises.

Avantageusement, le procédé de l'invention comprendra une étape de génération et d'envoi des données par un noeud initiateur émettant périodiquement et imposant sa période au reste du système.

De préférence, le procédé selon l'invention comprend un second noeud devenant « initiateur » en cas de défaillance du premier noeud initiateur.

Selon un aspect particulièrement avantageux de l'invention, les données, restant inchangées et passant à nouveau par le noeud d'origine des données, seront transmises sous une forme réduite signifiant leur constance.

De même, avantageusement, chaque noeud de transmission des données comprendra une table de prélèvement apte à autoriser le prélèvement des données nécessaires à sa tâche de contrôle.

Avantageusement, chaque noeud de transmission sera programmable et reprogrammable selon un code transmis par les noeuds voisins.

Avantageusement, chaque noeud transmettra un commentaire relatif au retard, aux déformations, distorsions ou à la répétition dans le cas où les données transmises sont effectivement reçues respectivement avec un retard, une déformation, une distorsion ou une répétition.

La présente invention se rapporte également au dispositif de mise en oeuvre du procédé décrit précédemment. Ce dispositif comprend des noeuds reliés entre eux par liaison filaire, ou optique, pour la circulation desdites données selon un réseau de liaison « point à point » caractérisé en ce qu'il ne comprend aucun contrôleur de protocole ni de bus informatique.

Grâce à l'invention, on réalise un procédé de coordination d'un système de calculateurs de contrôle embarqué par la combinaison de trois moyens :
- des liens point à point entre calculateurs,
- un mécanisme de circulation automatique des données sans contrôleur de protocole,
- une numérotation préalable des messages des calculateurs pour tout le système.

Les limitations de l'art antérieur observées dans un système à bus sont donc résolues comme suit :
- la perte d'un lien ou d'un noeud n'inhibe pas tout le système, seulement la liaison ou l'organe concernés,
- il y a autant d'émissions simultanées possibles qu'il y a de liens,
- sur un lien les fonctions d'identification de l'émetteur et du destinataire sont inutiles,
- le noeud est plus simple car dépourvu des éléments matériels nécessaires dans un système avec bus informatiques, il est possible d'en disséminer plus et donc de réduire le câblage filaire vers les capteurs ou actionneurs les plus simples. Selon un aspect particulièrement avantageux de l'invention, ces noeuds plus simples, non spécialisés et plus nombreux, sont plus économiques ;
- un lien point à point selon l'invention est beaucoup plus rapide qu'un bus,
- les liaisons filaires sécuritaires indispensables dans l'art antérieur sont remplacées selon l'invention par des liens redondants,
- simplicité de réalisation de la liaison point à point,
- pour la même raison, les interfaces point à point sont connues pour être plus simples et économiques.

On comprendra mieux l'invention à l'aide de la description, faite ci-après à titre purement explicatif.

Il n'a pas été choisi pour illustrer l'invention de réaliser une ou plusieurs figures schématiques dans la mesure où l'homme du métier est parfaitement capable d'appréhender et de visualiser les éléments matériels auxquels il sera fait référence dans la suite.

Dans l'art antérieur, les systèmes de connexion pour la transmission de données fonctionnent avec des bus selon les éléments et caractéristiques suivants :
1. support physique typiquement un ou plusieurs fils, paires torsadées, fibres optiques,
2. interface matériel circuit logique convertissant les données pour leur transmission en série,
3. contrôleur physique de protocole circuit logique qui arbitre l'accès au bus, autorise et valide les transmissions,
4. contrôleur logique de protocole partie logicielle du noeud spécifique à l'utilisation du bus,
5. applicatif partie logicielle du noeud assurant sa fonction de contrôle.

Nous allons voir dans la suite comment l'objet du procédé selon l'invention réalise un transfert de données sans nécessiter les étapes 3 et 4 ci-dessus.

Selon la présente invention, le bus est remplacé par un réseau de liaisons point à point. Dans le cadre de la présente invention, le terme « lien » signifie une liaison entre au plus deux noeuds. Le réseau selon l'invention est disposé pour fournir au moins deux chemins indépendants entre toute paire de noeuds échangeant des données jugées sécuritaires. Certains noeuds ne possèdent qu'un lien, par exemple ceux contrôlant un capteur ou un actionneur dont la perte éventuelle n'est pas critique au point de justifier des liens redondants. Certains noeuds possèdent deux liens et permettent de former des structures en chaîne ou en anneaux. Certains noeuds possèdent trois liens permettant de grouper des chaînes ou des anneaux de noeuds ou de constituer une pluralité de structures plus complexes.

Pour assurer la circulation des données sans les dispositifs de contrôle de protocole, l'invention définit un mécanisme de communication dépourvu de la complexité qui justifie ces dispositifs, à savoir qu'il y a émission et réceptions systématiques et inconditionnelles des données.

Les messages se propagent de noeud en noeud. Une réalisation selon l'invention se décrit par le fait que toute réception de message par un noeud est suivie inconditionnellement d'une réémission du message à l'identique ou d'un message commentant une erreur ou vice quelconque du message tel qu'un retard. Le procédé de l'invention emploie des chemins fermés, de sorte que les messages émis reviennent à leur originateur. Tout noeud est originateur des messages portant son état et celui de ses actionneurs, les mesures effectuées par les capteurs qu'il contrôle et éventuellement son identification.

Un noeud recevant un message dont il est l'originateur le propage avec un contenu mis à jour. Si le message a un autre originateur, il est simplement propagé, le noeud propagateur en prélevant ensuite le contenu éventuellement pertinent pour sa tâche de contrôle. Ce comportement est assez simple pour être assuré directement par les étapes 2 et 5 indiquées précédemment. On peut donc réaliser l'invention sans recourir à des dispositifs spécialisés dans la gestion d'un protocole, par exemple en n'utilisant qu'un port série asynchrone, ce qui est le but essentiel de l'invention.

Les interfaces physiques aux deux extrémités d'un lien doivent être compatible. Il est possible selon l'invention d'utiliser un standard physique pour un lien et un autre standard pour un autre lien du même noeud, pourvu que cette hétérogénéité soit compatible avec les besoins en vitesse de propagation.

D'autres comportements non essentiels sont généralement nécessaires dans une réalisation avantageuse du dispositif et procédé de l'invention :
- un noeud appelé initiateur émet périodiquement, imposant sa période d'émission au reste du système,
- au moins un second noeud devient initiateur en cas de défaillance du premier,
- dans les arrangements fermés, l'initiateur et les noeuds suivants émettent dans les deux sens, ce qui assure une résistance à la perte d'un élément,
- une stratégie particulière régit la propagation de la pulsation entre deux circuits fermés,
- les messages au contenu inchangé sont propagés sous une forme réduite signifiant leur constance,
- le bon fonctionnement de la chaîne de propagation fait partie de l'état transmis par les noeuds ; Ceci permettant de localiser les pannes.

La messagerie utilisée par le système est définie préalablement à l'assemblage de celui-ci. Chaque noeud se voit attribuer un ou plusieurs identifiants propres dont il marque les messages qu'il initie.

Dans le cas simple d'un noeud n'émettant qu'un seul type de message, par exemple un capteur élémentaire, le message possède un identifiant qui est de fait l'identifiant du noeud émetteur. Pour les noeuds plus complexes, une pluralité d'identifiants est possible.

De même, chaque noeud détient une table lui permettant de prélever les données nécessaires à sa tâche de contrôle. Cette table associe aux messages, reconnaissables par leurs identifiants, la position de la donnée pertinente dans le message. Il ne sera pas développé plus avant d'explications relatives aux susdites tables qui sont bien connues de l'homme du métier et sont utilisées ici en remplissant leurs fonctions classiques.

Dans une réalisation selon l'invention un système de contrôle embarqué est constitué de deux sous-systèmes :
Un Premier sous-système (ABCD) : noeuds A, B, C, D, et
Un second sous-système (EFGH) : noeuds E, F, G, H.

Les noeuds A et B, B et C, C et D, D et A sont respectivement reliés les uns aux autres et la liaison forme les liens correspondant ab, bc, cd, da. Le premier sous-système est relié par le réseau fermé le plus simple, un anneau.

De la même manière, les noeuds E et F, F et G, G et H, H et E sont reliés les uns aux autres et la liaison forme les liens correspondant ef, fg, gh, he. Le second sous-système est également relié par le réseau fermé le plus simple, un anneau.

À nouveau, le noeud D est relié au noeud E formant le lien ed et le noeud H est relié au noeud A formant le lien ha, les liens ed et ha relient les deux sous-systèmes ABCD et EFGH.

On notera dans la suite que tous les liens sont bidirectionnels.

On considèrera que :
- le noeud A possède un capteur cA,
- le noeud G possède un capteur cG,
- le noeud F possède un actionneur aF,
- le noeud F pilote aF d'après les mesures de cA et cG.

Les règles définissant la circulation des données dans la réalisation selon l'invention sont les suivantes :
- chaque noeud (ABCDEFGH) émet cycliquement un message portant l'identification de leur originateur, et les mesures de ses capteurs,
- ces messages circulent dans chaque sous-système, de noeud en noeud, dans les deux sens, jusqu'à être relus par leur originateur. Celui-ci les propage alors avec mise à jour éventuelle des mesures transportées,
- un noeud pilotant un actionneur prélève les données le concernant au passage.

Un noeud pilotant un capteur ou un actionneur possède sa loi d'activation, et il suffit que les données pertinentes soient produites dans le réseau. Si l'activation d'un actionneur produit une donnée pertinente en un autre point du système, alors le noeud concerné émet cette donnée dans son message d'état. Il n'est pas nécessaire que ce noeud (le programme qu'il héberge) connaisse la pertinence ou l'utilisation de cette donnée ailleurs dans le système.

Les autres règles relatives au dispositif selon l'invention s'énoncent comme suit :
- les messages reçus par un noeud sont endogènes, c'est-à-dire que le noeud récepteur en est l'émetteur initial, ou exogènes, c'est-à-dire que le message a été émis par un autre noeud ;
- les messages endogènes sont remplacés immédiatement par une version mise à jour. Un message endogène encore à jour, c'est-à-dire identique à la version mise à jour, est ré-émis sous sa forme courte, ne comprenant que l'identification du noeud et un témoin d'identité. Les messages courts réduisent l'énergie de communication du système ;
- les messages exogènes sont propagés sans délai. Leurs données ne sont utilisées localement qu'après le début de leur réémission ;
- un message jugé « erroné » est remplacé par un témoin d'erreur, qui ne sert qu'à synchroniser les échanges suivants ;
- le noeud A initie les échanges du sous-système ABCD en émettant le premier, dans les deux sens, à la mise sous tension ; Il émet également vers le noeud H. Celui-ci à son tour initie les échanges du sous-système EFGH. Si le noeud A est défaillant, le noeud H devient l'initiateur du système en émettant dans (EFGH) ;
- l'initiateur A (ou H en cas de défaillance de A) déroge aux règles en émettant périodiquement au lieu de propager les messages sans délai. Il respecte une période d'émission qui définit la pulsation du système. En raison de la propagation sans délai des messages, les échanges du système surviennent dans une première partie de la pulsation, à partir des émissions de l'initiateur, puis le système devient silencieux jusqu'à la fin de la période, dans l'attente de la prochaine pulsation.

La présente invention utilise un mode de synchronisation isochrone, grâce aux périodes de repos entre deux pulsations, avec pourtant une précision temporelle qui est celle de l'horloge de l'initiateur. À titre de comparaison, le mode isochrone est plus simple et donc plus économique qu'un mode synchrone qui demanderait des ressources importantes pour synchroniser tous les liens, à l'instar du protocole TTP (Time Triggered Protocol).

Selon un mode de réalisation destiné à illustrer l'invention, les messages de A et G sont de la forme suivante :
- Identification du message : 16 bits,
- état du noeud : 16 bits,
- mesure du capteur : 16 bits,
- clé de contrôle : 16 bits,
la liaison utilise une paire torsadée LVDS (Low Voltage Data Signaling) à 32 Mbits/s, la pulsation du système est définie à 100 µs, le temps de transfert d'un message : 64 bits à 32 Mbits/s : 2 µs et le temps de propagation à travers le noeud : 3 µs.

Si on prend l'exemple du cheminement des données de cA [cA] et cG [cG] vers aF (noeuds de A à F). Les données de cA, émises par A à Tₒ, parviennent à F après 10 µs de transfert (Tₒ + 10 µs).

A reçoit son message en fin de boucle, le reconnaît, prépare la version éventuellement mise à jour... Tₒ +15 µs.

Le sous-système est inactif, c'est-à-dire à très basse consommation, jusqu'au prochain cycle Tₒ +100 µs. La seule activité entre Tₒ +15 et Tₒ +100 est l'horloge de A décomptant la fin de cycle.

Il est trivial que [cG] parvient à F en 5 µs directement par G et en 15 µs par H et E.

Pour illustrer de façon complète le procédé et le dispositif selon l'invention, on pourra décrire également les cas possibles de pannes de la manière suivantes :
● Perte d'un lien :
   - dans l'art antérieur :
      1. problème électrique sur un bus, tout le bus est perdu (tous les noeuds isolés). Il n'est pas possible de déterminer l'emplacement du défaut.
      2. problème électrique sur la branche reliant un noeud ; le noeud est perdu.
   - dans le procédé de l'invention :
      la perte n'affecte pas les liens voisins ; il y a toujours au moins un second chemin entre deux noeuds ; l'emplacement de la panne est connu.
● Perte d'un noeud :
   - dans l'art antérieur :
      possibilité de mise en défaut de tout le bus (émission ininterrompue ou problème électrique),
   - dans le procédé selon l'invention :
      au pire, isolement du noeud, le noeud en panne étant connu.
● Perte du noeud initiateur :
   - dans l'art antérieur :
      le bus ne démarre pas,
   - dans le procédé selon l'invention :
      après expiration du délai de première émission, le second initiateur émet, on est ramené au cas précédent (perte d'un noeud).
● Message erroné à l'émission :
   - dans l'art antérieur :
      déclenchement de procédures d'erreur, modifiant le déterminisme temporel du système,
   - dans le procédé selon l'invention :
      message non propagé par les noeuds voisins, ou avec notification explicite de doute (le déterminisme temporel est conservé).

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de transmission de données dans un système fermé de calculateurs de contrôle embarqué, tels que par exemple dans un véhicule aérien ou terrestre, comportant :
- une étape de transmission de données point à point entre deux noeuds de transmission par exemple via un réseau filaire, chaque noeud possédant un ou plusieurs canaux autorisant chacun la transmission avec un unique noeud,
- une étape de conversion des données pour leur transmission, par exemple en série,
**caractérisé en ce que** :
- le calculateur de chacun des noeuds répond à la réception d'un message par une transmission inconditionnelle du message, seul un message dont le noeud est l'originateur pouvant être mis à jour par celui-ci, qui propage les flux d'informations le long de chaînes fermées, le contrôle des flux de données étant alors déterminé implicitement par la topologie câblée mise en oeuvre,
- et **en ce que** la transmission entre noeuds utilise un mode asynchrone.

2. Procédé de transmission de données selon la revendication 1, **caractérisé en ce qu'**il comprend en outre une étape d'inscription de l'état des noeuds par lesquelles les données sont transmises ou véhiculées.

3. Procédé de transmission de données selon l'une quelconque des revendications précédentes, **caractérisé en ce que** chaque noeud de transmission prélève le contenu pertinent pour sa tâche de contrôle dans les données transmises après leurs retransmissions.

4. Procédé de transmission de données selon l'une quelconque des revendications précédentes, **caractérisé en ce qu'**il comprend une étape de génération et d'envoi des données par un noeud initiateur émettant périodiquement et imposant sa période au reste du système.

5. Procédé de transmission de données selon la revendication 4, **caractérisé en ce qu'**il comprend un second noeud devenant « initiateur » en cas de défaillance du premier noeud initiateur.

6. Procédé de transmission de données selon l'une quelconque des revendications précédentes, **caractérisé en ce que** les données, restant inchangées et passant à nouveau par le noeud d'origine des données, sont transmises sous une forme réduite signifiant leur constance.

7. Procédé de transmission de données selon la revendication 3, **caractérisé en ce que** chaque noeud de transmission des données comprend une table de prélèvement apte à autoriser le prélèvement des données nécessaires à sa tâche de contrôle.

8. Procédé de transmission de données selon l'une quelconque des revendications précédentes, **caractérisé en ce que** chaque noeud de transmission est programmable et reprogrammable selon un code transmis par les noeuds voisins.

9. Procédé de transmission de données selon l'une quelconque des revendications précédentes, **caractérisé en ce que** chaque noeud transmet un commentaire relatif au retard, aux déformations, distorsions ou à la répétition dans le cas où les données transmises sont effectivement reçues respectivement avec un retard, une déformation, une distorsion ou une répétition.

10. Système de transmission de données pour la mise en oeuvre du procédé selon l'une quelconque des revendications précédentes 1 à 9, comprenant des noeuds reliés entre eux par liaison filaire pour la circulation desdites données selon un réseau de liaison « point à point » **caractérisé en ce qu'**il ne comprend aucun contrôleur de protocole ni de bus informatique.

## Patentansprüche

1. Verfahren zur Datenübertragung in einem geschlossenen System von Kontrollrechnern an Bord, wie zum Beispiel in einem Luft- oder Landfahrzeug, das aufweist:
- einen Schritt der Punkt-zu-Punkt-Datenübertragung zwischen zwei Übertragungsknoten, zum Beispiel über ein drahtgebundenes Netz, wobei jeder Knoten einen oder mehrere Kanäle besitzt, die je die Übertragung mit einem einzigen Knoten erlauben,
- einen Schritt der Konvertierung der Daten für ihre Übertragung, zum Beispiel seriell,
**dadurch gekennzeichnet, dass**
- der Rechner jedes der Knoten auf den Empfang einer Mitteilung durch eine bedingungslose Übertragung der Mitteilung reagiert, wobei nur eine Mitteilung, deren Urheber der Knoten ist, von diesem aktualisiert werden kann, der die Informationsströme entlang von geschlossenen Ketten verbreitet, wobei die Kontrolle der Datenströme dann implizit durch die angewendete verkabelte Topologie bestimmt wird,
- und dass die Übertragung zwischen Knoten einen asynchronen Modus verwendet.

2. Datenübertragungsverfahren nach Anspruch 1, **dadurch gekennzeichnet, dass** es außerdem einen Schritt des Eintragens des Zustands der Knoten enthält, durch die die Daten übertragen oder befördert werden.

3. Datenübertragungsverfahren nach einem der vorhergehenden Ansprüche, **dadurch gekennzeichnet, dass** jeder Übertragungsknoten den für seine Kontrolltask relevanten Inhalt aus den übertragenen Daten nach ihren Rückübertragungen entnimmt.

4. Datenübertragungsverfahren nach einem der vorhergehenden Ansprüche, **dadurch gekennzeichnet, dass** es einen Schritt der Erzeugung und des Sendens der Daten durch einen Initiatorknoten enthält, der periodisch sendet und seine Periode dem Rest des Systems aufzwingt.

5. Datenübertragungsverfahren nach Anspruch 4, **dadurch gekennzeichnet, dass** es einen zweiten Knoten enthält, der bei einem Ausfall des ersten Initiatorknotens zum « Initiator » wird.

6. Datenübertragungsverfahren nach einem der vorhergehenden Ansprüche, **dadurch gekennzeichnet, dass** die Daten, die unverändert bleiben und erneut durch den Ursprungsknoten der Daten gehen, in einer reduzierten Form übertragen werden, die ihre Beständigkeit bedeutet.

7. Datenübertragungsverfahren nach Anspruch 3, **dadurch gekennzeichnet, dass** jeder Übertragungsknoten der Daten eine Entnahmetabelle enthält, die die Entnahme der für seine Kontrolltask notwendigen Daten erlauben kann.

8. Datenübertragungsverfahren nach einem der vorhergehenden Ansprüche, **dadurch gekennzeichnet, dass** jeder Übertragungsknoten gemäß einem von den benachbarten Knoten übertragenen Code programmiert und neu programmiert werden kann.

9. Datenübertragungsverfahren nach einem der vorhergehenden Ansprüche, **dadurch gekennzeichnet, dass** jeder Knoten einen Kommentar bezüglich der Verzögerung, der Verformungen, der Verzerrungen oder der Wiederholung überträgt, falls die übertragenen Daten tatsächlich mit einer Verzögerung, einer Verformung, einer Verzerrung bzw. einer Wiederholung empfangen werden.

10. Datenübertragungssystem zur Anwendung des Datenübertragungsverfahrens nach einem der Ansprüche 1 bis 9, das Knoten enthält, die untereinander durch eine Drahtverbindung für den Fluss der Daten gemäß einem « Punkt-zu-Punkt »-Verbindungsnetz verbunden sind, **dadurch gekennzeichnet, dass** es weder einen Protokollcontroller noch einen Informatik-Bus enthält.

## Claims

1. Method of data transmission in a closed system of control computers embedded onboard, such as for example in an aerial or terrestrial vehicle, comprising:
- a step of point-to-point data transmission between two transmission nodes for example via a wire-based network, each node possessing one or more channels each authorizing the transmission with a unique node,
- a step of converting the data for their transmission, for example in series,
**characterized in that**:
- the computer of each of the nodes responds to the receipt of a message by an unconditional transmission of the message, only a message whose node is the originator being able to be updated by the latter, which propagates the information streams along closed chains, the control of the data streams then being determined implicitly by the cabling topology implemented,
- and **in that** the transmission between nodes uses an asynchronous mode.

2. Method of data transmission according to Claim 1, **characterized in that** it furthermore comprises a step of registering the state of the nodes by which the data are transmitted or conveyed.

3. Method of data transmission according to either one of the preceding claims, **characterized in that** each transmission node collects the relevant content for its control task from the data transmitted after their retransmissions.

4. Method of data transmission according to any one of the preceding claims, **characterized in that** it comprises a step of data generation and dispatch by an initiator node emitting periodically and imposing its period on the remainder of the system.

5. Method of data transmission according to Claim 4, **characterized in that** it comprises a second node which becomes the "initiator" in the case of failure of the first initiator node.

6. Method of data transmission according to any one of the preceding claims, **characterized in that** the data, remaining unchanged and passing again through the origin node of the data, are transmitted in a reduced form signifying their constancy.

7. Method of data transmission according to Claim 3, **characterized in that** each data transmission node comprises a collection table able to authorize the collection of the data necessary for its control task.

8. Method of data transmission according to any one of the preceding claims, **characterized in that** each transmission node is programmable and reprogrammable according to a code transmitted by the neighbour nodes.

9. Method of data transmission according to any one of the preceding claims, **characterized in that** each node transmits a comment relating to the delay, to the deformations, distortions or to the repetition in the case where the data transmitted are actually received respectively with a delay, a deformation, a distortion or a repetition.

10. System for data transmission for the implementation of the method according to any one of the preceding Claims 1 to 9, comprising nodes linked together by wire-based link for the circulation of the said data according to a "point-to-point" link network, **characterized in that** it does not comprise any protocol controller or any computer bus.
